# EUROPÄISCHE PATENTSCHRIFT

(11) **EP 0 783 994 B1**
(45) Veröffentlichungstag und Bekanntmachung des Hinweises auf die Patenterteilung: **07.03.2001**
(21) Anmeldenummer: 96118882.8
(22) Anmeldetag: 26.11.1996
(51) Int. Cl.: B60R 16/02, H02J 7/24, H02P 9/30

(54) **Steuerungssystem für einen Generator eines Kraftfahrzeuges**
Vehicle alternator control system
Système de pilotage de l'alternateur d'un véhicule

(30) Priorität: 12.01.1996 DE 19600838
(43) Veröffentlichungstag der Anmeldung: 16.07.1997
(73) Patentinhaber: Bayerische Motoren Werke Aktiengesellschaft, 80788 München (DE)
(72) Erfinder: Pfab, Xaver, 84424 Isen (DE); Fröschl, Joachim, 82211 Herrsching (DE)

(56) Entgegenhaltungen:
- EP-A- 0 438 884
- EP-A- 0 481 862
- EP-A- 0 720 271
- DE-A- 4 108 751
- DE-A- 4 445 814
- GB-A- 1 427 133
- US-A- 5 349 747

## Beschreibung

Die Erfindung betrifft ein Steuerungssystem für einen Generator eines Kraftfahrzeuges, wobei der Generator-Regler Signale von einer elektronischen Steuereinheit der auch den Generator antreibenden Kraftfahrzeug-Antriebsmaschine, insbesondere Brennkraftmaschine, erhält. Zum bekannten Stand der Technik wird beispielshalber auf die DE 41 08 751 A1 verwiesen.

Üblicherweise stellt der von der Kraftfahrzeug-Brennkraftmaschine angetriebene Generator zur Erzeugung der im Kraftfahrzeug benötigten elektrischen Energie bzw. zur Speisung der Fahrzeug-Batterie im Bordnetz des Kraftfahrzeuges ein autarkes System dar. Dies bedeutet, daß die wesentlichen Generator-Funktionen, wie beispielsweise das Einschalten, aber insbesondere die Regelung der Generator-Spannung weitgehend mit generatoreigenen Mitteln und Eingangssignalen umgesetzt werden. Hierzu ist üblicherweise am Generator ein Regler vorgesehen, der mit verschiedenen Eingangssignalen versorgt wird, so insbesondere über die aktuelle Batterie-Spannung. Die oben genannte Schrift zeigt weitere Signal-Zuleitungen zum Generator-Regler, so u. a. ein Last-Ausgangssignal der elektronischen Steuereinheit der Kraftfahrzeug-Antriebsmaschine.

Die Zuführung der verschiedenen Signale zum Generator-Regler macht eine Vielzahl von Leitungen erforderlich und stellt somit nicht nur im Hinblick auf die Verbindungstechnik, sondern auch auf die Sensorik eine äußerst aufwendige Lösung dar. Aufgrund dessen ist das Ausfallrisiko auch relativ hoch.

Auch aus der EP-A-0 438 884 ist ein derartiges Steuerungssystem bekannt, bei dem der Generator-Regler mit der elektronischen Steuereinheit zumindest über zwei unidirektionale Schnittstellen verbunden ist.

Um die Vielzahl von Leitungen in Kraftfahrzeugen zu reduzieren, ist es beispielsweise aus der GB-A-1 427 133 zwar grundsätzlich bekannt, eine Steuergeräteleitung als bidirektionale Kommunikationsleitung zu verwenden. Hierzu ist jedoch eine speziell definierte Schaltung am Ein- bzw. Ausgang der Steuergeräte erforderlich.

Daher liegt der Erfindung die Aufgabe zugrunde, ohne zusätzlichem Hardware-Aufwand die Leitungen zwischen dem Generator-Regler und der Steuereinheit zu reduzieren.

Diese Aufgabe wird durch die Merkmale des Patentanspruchs 1 gelöst. Vorteilhafte Weiterbildungen sind Inhalt der Unteransprüche.

Zur näheren Erläuterung der Erfindung wird auch auf die beigefügte Schaltskizze eines bevorzugten Ausführungsbeispieles verwiesen.
Hier ist mit der Bezugsziffer 1 die elektronische Steuereinheit einer insbesondere als Brennkraftmaschine ausgebildeten Antriebsmaschine für das Kraftfahrzeug dargestellt, deren Mikrokontroller die Bezugsziffer 2 trägt. Ein üblicher Regler eines nicht gezeigten Generators ist mit der Bezugsziffer 3 bezeichnet und stellt - wie üblich - eine gegenüber der elektronischen Steuereinheit 1 separate Baueinheit dar. Jedoch besteht eine Verbindung zwischen der elektronischen Steuereinheit 1 sowie dem Regler 3 in Form einer sog. bidirektionalen Schnittstelle 4. Dies bedeutet, daß hardwaremäßig lediglich eine einzige Leitung erforderlich ist, um Signale zwischen der elektronischen Steuereinheit 1 sowie dem Regler 3 zu übertragen.

Bevorzugt erfolgt die Signalübertragung über die bidirektionale Schnittstelle 4 von der Steuereinheit 1 zum Regler 3 durch Pulsweitenmodulation (PWM) und vom Regler 3 zur Steuereinheit 1 durch Amplitudenmodulation (AM). Zur Auswertung des amplitudenmodulierten Signals im Mikrocontroller 2 ist diesem ein A/D-Wandler vorgeschaltet, daneben ist in der Steuereinheit 1 zusätzlich eine übliche Endstufe 5 vorgesehen. Auf der anderen Seite ist im Bereich des Reglers 3 ein pull-up-Widerstand R1 vorgesehen, der einerseits mit der Batteriespannung UB verbunden ist und zusammen mit dem Widerstand R2 sowie dem Schalttransistor 6 einen Spannungsteiler zur Erzeugung des amplituden-modulierten Signales bildet. Ein Eingangssignal dieses Schalttransistors 6 stellt der sog. DF-Monitor dar, der an späterer Stelle noch erläutert wird. Anstelle des Schalttransistors 6 mit dem erläuterten Spannungsteiler kann selbstverständlich auch ein variabler Widerstand vorgesehen sein, um ein amplituden-moduliertes Signal zu erzeugen. Schließlich ist dem Regler noch eine in ihrer Gesamtheit mit 7 bezeichnete Schutzbeschaltung vorgelagert.

Über die bidirektionale Schnittstelle 4 können nunmehr eine Vielzahl von Signalen übertragen werden. Insbesondere ist vorgesehen, daß der Generator-Regler 3 von der Steuereinheit 1 eine Sollwertvorgabe für die Generator-Spannung erhält. Dabei kann entweder ein Offset zu einem im Regler 3 abgelegten Festwert übermittelt werden oder die gewünschte Generator-Spannung kann als absolute Führungsgröße von der Steuereinheit 1 vorgegeben werden. Nach welchen Kriterien dabei der Sollwert für die Generator-Spannung ermittelt wird, wird an späterer Stelle noch näher erläutert.

Umgekehrt kann über die bidirektionale Schnittstelle 4 die Steuereinheit 1 vom Generator-Regler 3 ein DF-Monitor-Signal als Referenz für den Lastzustand des Generators erhalten. Dieses dem Fachmann bekannte DF-Monitor-Signal liefert eine Aussage über den Zustand des Reglers 3 bzw. des Generators, d. h. ob der Generator noch in der Lage ist, einen höheren Spannungswert bereitzustellen oder ob der Regler 3 bereits den derzeit maximal erreichbaren Spannungswert weitergibt. Ferner kann die Steuereinheit 1 vom Generator-Regler 3 über diese bidirektionale Schnittstelle 4 auch ein Eigendiagnosesignal erhalten. In der Steuereinheit 1 kann somit abgefragt werden, ob der Generator selbst bzw. der zugehörige Regler 3 einwandfrei arbeitet, oder ob irgendwelche Fehlfunktionen erkannt wurden.

In einer besonders vorteilhaften Weiterbildung der Erfindung kann eine weitere Verbindung zu einem Datenbussystem des Kraftfahrzeuges vorgesehen sein. Insbesondere kann diese Verbindung über die Steuereinheit 1 sowie beispielsweise über einen sog. CAN-Bus - dieses sog. controller area network stellt einen asynchronen seriellen Datenbus dar - beispielsweise mit einem sog. gateway verbunden sein, an das der sog. Karosserie-Datenbus eines modernen Kraftfahrzeuges angeschlossen ist. Es ist somit eine Verbindung - evtl. auch direkt - herstellbar zu den weiteren Steuergeräten des Kraftfahrzeuges. Von besonderem Interesse sind hierbei Steuergeräte für elektrische Verbraucher, so daß über dieses Datenbussystem beispielsweise abgefragt werden kann, ob eine elektrische Heckscheibenheizung, eine elektrische Sitzheizung, die Lichtanlage des Fahrzeuges oder weiteres in Betrieb ist. All diese Größen können relevant sein für die Ermittlung des jeweils gewünschten vom Generator zu liefernden und vom Regler 3 einzustellenden Spannungswertes.

Im einzelnen kann durch die Sollwertvorgabe für die Generator-Spannung, die von der elektronischen Steuereinheit 1 über die bidirektionale Schnittstelle 4 an den Regler 3 übermittelt wird, zunächst einmal der Generator eingeschaltet werden, nachdem die Startroutine der insbesondere als Brennkraftmaschine ausgebildeten Kraftfahrzeug-Antriebsmaschine abgeschlossen ist. Diese Funktion ist als start-load-response dem Fachmann bekannt und war bisher in üblichen Generator-Reglern selbst integriert. Mit der Ansteuerung durch die elektronische Steuereinheit 1 der Kraftfahrzeug-Antriebsmaschine kann diese sog. start-load-response am Generator-Regler 3 selbst entfallen, so daß dieser Regler 3 nunmehr einfacher gestaltet werden kann.

Wie bereits erwähnt, wird von der Steuereinheit 1 jedoch auch nach erfolgreichem Start der Fahrzeug-Brennkraftmaschine eine Spannungs-Sollwert-Steuerung vorgenommen. Bei der Ermittlung dieses Sollwertes können eine Vielzahl von Größen oder Randbedingungen berücksichtigt werden, so insbesondere die aktuelle Batteriespannung, aber auch die Batterietemperatur, um festzustellen, mit welchem maximalen Spannungswert die Batterie beladen werden darf. Hierbei kann auch der aktuelle Batterie-Ladezustand sowie der aktuelle Stromfluß von bzw. zu der Batterie berücksichtigt werden.

Insbesondere unter Rückgriff auf die oben geschilderte weitere Verbindung zu einem Datenbussystem des Kraftfahrzeuges kann die in der Steuereinheit 1 erfolgende Sollwertvorgabe-Ermittlung für die Generator-Spannung auch den Belastungszustand des Kraftfahrzeug-Bordnetzes sowie den Betriebszustand diverser elektrischer Verbraucher im Kraftfahrzeug berücksichtigen. In diesem Zusammenhang können beispielsweise erhöhte Spannungswerte zur Verfügung gestellt werden, es können jedoch auch Grenzspannungswerte vorgegeben werden, beispielsweise für die sog. Lampenschutzfunktion, da die Beleuchtungskörper des Kraftfahrzeuges aus Lebensdauergründen nur mit einem gewissen Maximalspannungswert beaufschlagt werden sollten.

Eingang in die Sollwert-Ermittlung für die Generator-Spannung finden kann ferner der Betriebszustand der Antriebsmaschine sowie des Kraftfahrzeuges.

So kann beispielsweise eine sog. Nutzbremsung initialisiert werden, wenn das Kraftfahrzeug unter Einfluß eines anderen Fahrzeug-Steuergerätes verlangsamt werden soll. Eine erhöhte Spannungsabfrage am Generator erhöht dann dessen Leistungsaufnahme und erhöht somit auch das Bremsmoment der Fahrzeug-Antriebsmaschine, was letztlich zu einer Negativbeschleunigung des Kraftfahrzeuges führt. Schließlich kann beispielsweise in Abhängigkeit von der aktuellen Leerlaufdrehzahl der Fahrzeug-Brennkraftmaschine ebenfalls ein Soll-Spannungswert berechnet werden; umgekehrt ist es möglich, in Abhängigkeit vom aktuellen Spannungsbedarf beispielsweise die Leerlaufdrehzahl der Brennkraftmaschine zu regeln. Hierfür wird im Mikrocontroller 2 der Steuereinheit 1 das besagte DF-Monitor-Signal verarbeitet.

Vorgesehen sein kann weiterhin eine Notlauffunktion für einen Störungsfall in der Sollwertvorgabe, sei es in der Berechnung oder sei es auch in der Übermittlung des Sollwertes über die bidirektionale Schnittstelle 4. Bevorzugt ist diese Notlauffunktion autark und hierbei in den Regler 3 selbst integriert. Jedoch kann dies sowie weitere Details durchaus abweichend von den bisherigen Schilderungen gestaltet sein, ohne den Inhalt der Patentansprüche zu verlassen.

Insgesamt zeichnet sich die Erfindung durch eine Reduzierung der benötigten elektrischen Verbindungen zwischen dem Generator-Regler 3 sowie dem gesamten Bordnetz des Kraftfahrzeuges auf eine einzige Leitung aus. Dies bedeutet selbstverständlich auch eine vorteilhafte Reduzierung der Steckverbindungen. Auch ergibt sich hiermit eine Reduzierung der Variantenvielfalt von Generatoren bzw. Generator-Reglern 3, da die jeweils fahrzeugspezifische Applikation in den jeweils fahrzeugspezifischen Umfang der elektronischen Steuereinheit 1 integriert sein kann. Ferner besteht eine verbesserte Diagnosemöglichkeit, die im übrigen durch die Anbindung an das Datenbussystem des Kraftfahrzeuges in bestehende Systeme integriert werden kann, was bedeutet, daß im einfachsten Fall die übliche Ladekontrollampe als Stör-Anzeigelampe verwendet werden kann. Auch wird mit dem erfindungsgemäßen Steuerungssystem die Batterie-Beladung verbessert, da den Anforderungen des Überladungsschutzes verbessert Rechnung getragen werden kann, insbesondere wenn die Batterietemperatur direkt oder indirekt bei der Ermittlung der Sollwertvorgabe für die Generator-Spannung berücksichtigt wird. Auch ist es durch Berechnungen im Mikrocontroller 2 in der elektronischen Steuereinheit 1 möglich, die Batterie des Kraftfahrzeuges verbessert vor Entladung zu schützen und ein gezieltes Angebots/Verbrauchermanagement, beispielsweise durch Drehzahlanhebung des Generators/der Fahrzeug-Antriebsmaschine, aber auch durch Verbraucherpriorisierung oder Verbraucherabschaltung zu realisieren.

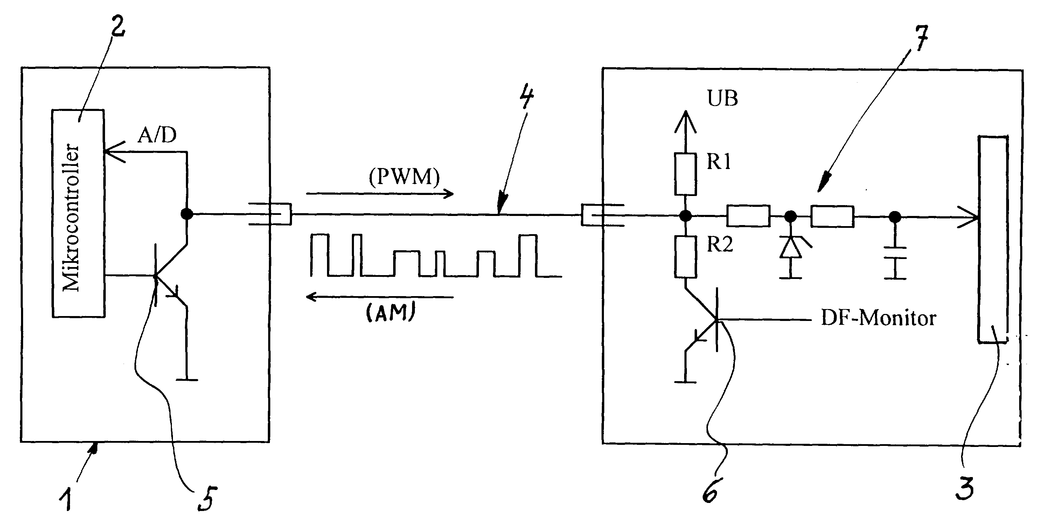

## Patentansprüche

1. Steuerungssystem für einen Generator eines Kraftfahrzeuges, wobei der Generator-Regler (3) Signale von einer elektronischen Steuereinheit (1) der auch den Generator antreibenden Kraftfahrzeug-Antriebsmaschine, insbesondere Brennkraftmaschine, erhält,
dadurch gekennzeichnet, daß der Generator-Regler (3) mit der elektronischen Steuereinheit (1) über eine bidirektionale Schnittstelle (4) verbunden ist, wobei
die Signalübertragung über die bidirektionale Schnittstelle (4) in einer Richtung durch Pulsweitenmodulation (PWM) und in der anderen Richtung durch Amplitudenmodulation (AM) erfolgt.

2. Steuerungssystem nach Anspruch 1,
dadurch gekennzeichnet, daß der Generator-Regler (3) von der Steuereinheit (1) eine Sollwertvorgabe für die Generator-Spannung entweder als Offset zu einem im Regler (3) abgelegten Festwert oder als absolute Führungsgröße erhält.

3. Steuerungssystem nach einem der vorangegangenen Ansprüche,
dadurch gekennzeichnet, daß die Steuereinheit (1) vom Generator-Regler (3) ein DF-Monitor-Signal als Referenz für den Lastzustand des Generators erhält.

4. Steuerungssystem nach einem der vorangegangenen Ansprüche,
dadurch gekennzeichnet, daß die Steuereinheit (1) vom Generator-Regler (3) ein Eigendiagnosesignal erhält.

5. Steuerungssystem nach einem der vorangegangenen Ansprüche,
dadurch gekennzeichnet, daß eine weitere Verbindung zu einem Datenbussystem des Kraftfahrzeuges besteht.

6. Steuerungssystem nach einem der vorangegangenen Ansprüche,
dadurch gekennzeichnet, daß die Sollwertvorgabe für die Generator-Spannung unter Berücksichtigung von zumindest einer der folgenden Größen oder Randbedingungen gebildet wird:
- Batteriespannung
- Batterietemperatur
- Aktueller Stromfluß von/zu der Batterie
- Batterie-Ladezustand
- Belastungszustand des Kraftfahrzeug-Bordnetzes
- Betriebszustand diverser elektrischer Verbraucher im Kraftfahrzeug
- Betriebszustand der Antriebsmaschine und/oder des Kraftfahrzeuges

7. Steuerungssystem nach einem der vorangegangenen Ansprüche,
dadurch gekennzeichnet, daß für einen Störungsfall in der Sollwertvorgabe eine Notlauffunktion vorgesehen ist.

## Claims

1. A control system for a generator in a motor vehicle, whereby the generator regulator (3) receives signals from an electronic control unit (1) which is also of the engine driving the generator, especially an internal combustion engine, characterised in that the generator regulator (3) is connected to the control unit (1) via a bi-directional interface (4), whereby the signal transmission via the bi-directional interface (4) is effected in one direction using pulse width modulation (PWM) and in the other direction using amplitude modulation (AM).

2. A control system according to Claim 1,
characterised in that the generator regulator (3) receives a target value prescription for the generator voltage from the control unit (1) either as an offset to a fixed value stored in the regulator or as an absolute management value.

3. A control system according to one of the foregoing claims,
characterised in that the control unit (1) receives a DF Monitor signal from the generator regulator (3) as a reference for the loading condition of the generator.

4. A control system according to one of the foregoing claims,
characterised in that the control unit (1) receives a self diagnosis signal from the generator regulator (3).

5. A control system according to one of the foregoing claims,
characterised in that a further connection exists to a data bus system in the vehicle.

6. A control system according to one of the foregoing claims,
characterised in that the target value prescription for the generator voltage is reached under consideration of at least one of the following values or boundary conditions:
- Battery voltage
- Battery temperature
- Actual current flow from/to the battery
- Battery charge condition
- Loading condition of the vehicle on-board network
- Operating status of various electrical appliances in the motor vehicle
- Operating status of the propulsion engine and/or of the motor vehicle

7. A control system according to one of the foregoing claims,
characterised in that an emergency running function is provided for the event of a failure in the target value prescription.

## Revendications

1. Système de commande d'un générateur de véhicule automobile, selon lequel le régulateur (3) du générateur reçoit des signaux d'une unité de commande électronique (1) du moteur du véhicule, notamment du moteur à combustion interne, entraînant le générateur,
caractérisé en ce que
le régulateur (3) du générateur est relié à l'unité de commande électronique (1) par une interface bidirectionnelle (4), la transmission des signaux se faisant par l'interface bidirectionnelle (4) dans une direction par modulation de largeur d'impulsion (PWM), et dans l'autre direction, par modulation d'amplitude (AM).

2. Système de commande selon la revendication 1,
caractérisé en ce que
le régulateur (3) du générateur reçoit de l'unité de commande (1), une valeur de consigne de la tension du générateur soit comme décalage par rapport à une valeur fixe enregistrée dans le régulateur (3) soit comme grandeur guide absolue.

3. Système de commande selon l'une quelconque des revendications précédentes,
caractérisé en ce que
l'unité de commande (1) reçoit, du régulateur (3) du générateur, un signal de contrôle DF comme signal de référence de l'état de charge du générateur.

4. Système de commande selon l'une quelconque des revendications précédentes,
caractérisé en ce que
l'unité de commande (1) reçoit du régulateur (3) du générateur un signal de diagnostic propre.

5. Système de commande selon l'une quelconque des revendications précédentes,
caractérisé par
une autre liaison avec un système de bus de données du véhicule.

6. Système de commande selon l'une quelconque des revendications précédentes,
caractérisé en ce que
la valeur de consigne prédéterminée pour la tension du générateur est formée en tenant compte d'au moins l'une des grandeurs ou conditions limites suivantes :
- tension de la batterie,
- température de la batterie,
- intensité instantanée du courant échangé avec la batterie,
- état de charge de la batterie,
- état de charge du réseau embarqué du véhicule,
- état de fonctionnement de différents consommateurs électriques dans le véhicule,
- état de fonctionnement du moteur et/ou du véhicule.

7. Système de commande selon l'une quelconque des revendications précédentes,
caractérisé par
une fonction de fonctionnement de secours dans la prédétermination de la valeur de consigne pour une situation perturbée.
